(19) **Europäisches Patentamt / European Patent Office / Office européen des brevets**

(11) **EP 3 035 619 B1**

(12) **EUROPEAN PATENT SPECIFICATION**

(45) Date of publication and mention
of the grant of the patent:
**13.02.2019 Bulletin 2019/07**

(21) Application number: **14307034.0**

(22) Date of filing: **15.12.2014**

(51) Int Cl.:
*H04L 12/931* (2013.01)　　*G06F 9/455* (2018.01)
*G06F 9/50* (2006.01)　　*G06F 11/34* (2006.01)
*G06F 11/30* (2006.01)

(54) **A method and system for scaling and a telecommunications network**

Verfahren und System zum Skalieren und ein Fernmeldenetz

Procédé et système de mise à l'échelle et réseau de télécommunications

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.06.2016 Bulletin 2016/25**

(73) Proprietor: **Alcatel Lucent**
**91620 Nozay (FR)**

(72) Inventors:
• **Jul, Eric**
**Dublin, 15 (IE)**
• **Mahmoudi, Hamed**
**Dublin, 15 (IE)**
• **Bauer, Markus**
**70435 Stuttgart (DE)**

(74) Representative: **Nokia EPO representatives
Nokia Technologies Oy
Karaportti 3
02610 Espoo (FI)**

(56) References cited:
**US-A1- 2013 007 254　　US-A1- 2013 174 146
US-A1- 2014 317 261**

• **"Network Function Virtualization (NFV)
Management and
Orchestration;NFV-MAN001v0313-clean", ETSI
DRAFT; NFV-MAN001V0313-CLEAN,
EUROPEAN TELECOMMUNICATIONS
STANDARDS INSTITUTE (ETSI), 650, ROUTE DES
LUCIOLES ; F-06921 SOPHIA-ANTIPOLIS ;
FRANCE, vol. ISG, no. V0.3.13, 10 April 2014
(2014-04-10), pages 1-147, XP014182211,
[retrieved on 2014-04-10]**

**Description**

TECHNICAL FIELD

Aspects relate, in general to a method and system for scaling one or more of VM instances, and a telecommunications network.

BACKGROUND

Typically, telecommunication network systems are designed and provisioned to cover worst-case traffic scenarios. In practice therefore, a number of network elements are deployed to provide an over-provisioning, which can amount to more than 50% of the actually required resources for the average or typical case. The rationale behind this approach is to enable fulfillment of service level agreement (SLA) levels. However, it comes at the expense of capital and operational expenditure, which are generally considered to become unaffordable in the years to come in view of the rate of traffic growth, mainly driven by mobile devices for example.

Virtualisation technologies can be used in telecommunications networks to execute network functions in virtual machines (VMs) in order to improve dependability, a quality of experience for an end user and reduce capital and operational expenditure of network operators for example. Such on-demand provisioning is based on system metrics like CPU, network or memory utilization for example of each individual VM.

Published US patent application 2014/0317261 A1 discloses a method in which a set of virtualized network functions (VNFs) which are required for carrying out a particular virtualized network service are identified as such by setting an interdependency indicator (e.g. a bit flag) for each VNF in the set to a common value.

Published US patent application 2013/0174146 A1 discloses a method of dynamically scaling a set of virtual machines in a service cluster on the basis, at least in part, of a predicted workload derived from historical workload demands.

Published US patent application 2013/0007254 A1 discloses a method of controlling network utilisation in which the capacity of a set of VMs operating on one host can be dynamically increased or reduced by migration of VMs to or from another host.

Methods of dynamically scaling the capacity of a VNF according to changes in demand by instantiation of additional VMs in a set of VMs for carrying out the VNF are also disclosed in the document "Network Function Virtualisation (NFV) Management and Orchestration", V0.3.I3, by published the European Telecommunications Standards Institute (ETSI) (April 2014).

SUMMARY

According to an example, there is provided a computer-implemented method, in a virtualized system comprising multiple virtual machine (VM) instances executing over physical hardware, for scaling one or more of the VM instances, the method comprising collecting data representing one or more interactions between VM instances for execution of a service or application, generating via cross correlation of said data dependency data representing a causal relationship between a set of VM instances and indicating a direct and/or indirect dependency between the set of VM instances , generating from said data a load metric representing expected future demand of a performance metric, determining a current state of the set of VM instances, calculating from the load metric and the current state, using one or more scaling rules, a number of VM instances for the set to meet the desired performance metric for the service or application by comparing the current state of the set of VM instances with a predetermined number of VM instances expected to meet the desired performance metric for the service or application and transmitting a signal to rescale one or more VM instances based on the calculated number of VM instances. The method can further include receiving raw data relating to interactions between VM instances of the system from the system at a data collector module. A scaling rule can relate a load metric to a category of VM instance. A scaling rule can be updated to modify the predefined number of VM instances in response to a change in the dependency data. A configuration for the set of VMs can be generated using a service scaling description language, wherein the configuration includes data representing information elements exchanged between the different ones of the VMs of the set.

According to an example, there is provided a system for scaling one or more virtual machine, VM, instances in a virtualized environment comprising multiple VM instances executing over physical hardware, the system comprising a data collector module arranged to receive data representing one or more interactions between VM instances for execution of a service or application, an analytics module arranged to generate dependency data from the data received by the data collection module via cross-correlation of said data, the dependency data representing a causal relationship between a set of VM instances and indicating a direct and/or indirect dependency between the set of VM instances and a load metric representing expected future demand of a performance metric, a service model module arranged to receive a current state of the set of VM instances, and the load metric from the analytics module and use a scaling rule to calculate a number of VM instances for the set to meet the desired performance metric for the service or application by comparing the current state of the set of VM instances with a predetermined number of VM instances expected to meet the desired performance metric for the service or application and a rescale module arranged to receive the calculated number and transmit a signal for the system to rescale one or more VM instances in the set. The data collector can receive data representing a desired performance indicator for the system.. The data collector can receive raw data relating to interactions between VM instances of the set via a monitoring interface of the system.

According to an example, there is provided a telecommunications network comprising a system of the invention.

BRIEF DESCRIPTION OF THE DRAWINGS

Embodiments will now be described, by way of example only, with reference to the accompanying drawings, in which:

Figure 1 is a schematic representation of a system according to an example;

Figure 2 is a schematic representation of a Service Description File used to setup and configure a specific service scaling architecture deployment according to an example;

Figure 3 is a schematic representation showing the dependency structure in a system composed of four virtual machines according to an example;

Figure 4 is a flowchart of a method according to an example; and

Figure 5 is a schematic representation of a telecommunications network according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In a virtualized system comprising multiple virtual machine (VM) instances executing over physical hardware, multiple ones of the VMs can interact to provide a service or application. Typically such services or applications have variable loads that lead to variable resource requirements. According to an example, one or more of the VMs for a service or application (service elements) can be scaled to suit the demand.

If resources are too few and the service thus is under provisioned, the one or more service elements may become overloaded and fail to meet required performance criteria for the service, while when the service is overprovisioned, resources are wasted and costs are increased above the optimal.

Typically, resource scaling in response to a variation in the load of a system is reactive in that the performance of the service and the system running it is monitored and service elements are then scaled up or down as required. However, scaling takes time and takes place when the increased/decreased load is already present. Furthermore, the decision as to which service elements to scale is often chosen using heuristics, i.e., is often merely educated guesses.

According to an example, a method and system are provided to enable proactive scaling of a service executing in a virtualized system using one or more VMs. Real-time analytics of data provided by the system can be used to generate a model of the behavior of the service under varying loads. The analytics can enable dynamic adjustment of the model. That is, a model can be modified to take account of changes in system load and usage patterns for example.

A service and the system it is running upon can be described using a general service scaling description language. The service description can be used to build an initial configuration model of the system. A performance model of the system can be generated using the analytics to generate a causality graph representing how individual service elements interact without any a priori previous knowledge of the service. The system can be monitored in real time to continuously update the performance model and continuously update the configuration model of the running system.

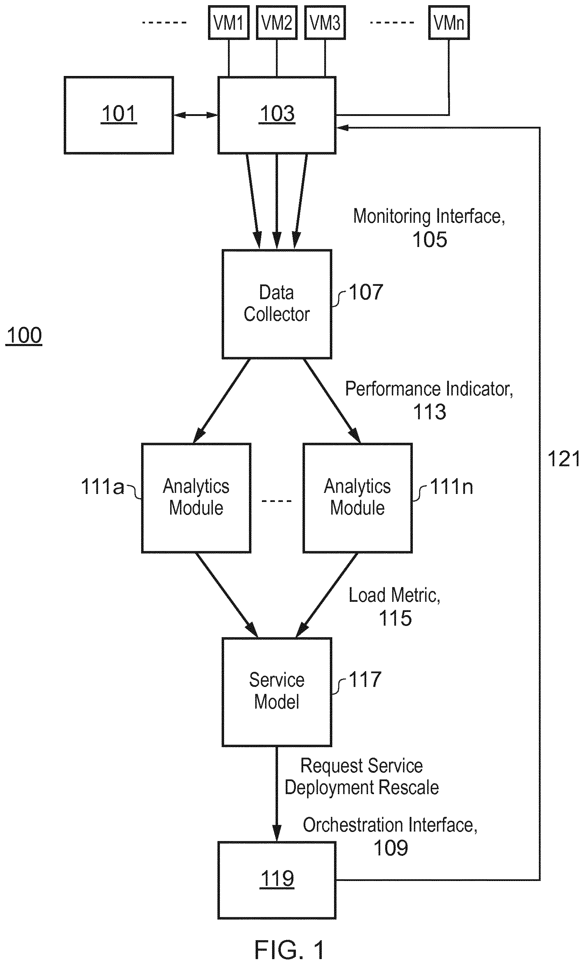

Figure 1 is a schematic representation of a system according to an example. In a virtualized system, multiple virtual machine instances (VMs) VMI-n execute over physical hardware 101 via a hypervisor or virtual machine monitor 103. A monitoring interface 105 acts as a bridge between hypervisor 103 and a data collector module 107, described in more detail below. The monitoring interface 105 receives raw data from the underlying cloud platform (101, 103) and/or from the service or application executing on one or more of the VMs, VMI-n for example. That is, raw data can be provided from a service level component within one or more VMs, and/or from a monitoring module of the system as described above. The service level component can be a module executing in one or more VMs for a service or application that is operable to provide data representing service level interactions, such as interactions between VMs for the service/application and/or between VMs and a client device and/or between VMs and the underlying system.

An orchestration interface 109 is operable to provide data representing instructions for the system to reconfigure (i.e., by booting up, instantiating or tearing down (deleting) specific types of VMs) the service or application.

In an example, the data collector module 107 requests or otherwise receives real-time platform and service monitoring data from hypervisor 103 via the monitoring interface 105. In an example, the data collector can be part of a hypervisor. The data collector module 107 can condition the collected data such that it is brought into a meaningful representation for an analytics module. The data collector module 107 transmits collected information (either raw data or processed/conditioned data) to an analytics module 111a-n.

In an example, when the service scaling architecture 100 of figure 1 includes a number of analytics modules as is depicted, the data collector module can transmit specific data to the corresponding analytics module(s). For example, certain types of data can be transmitted to one or more analytics modules. The data collector module 107 provides a configurable, efficient and flexible mechanism to provide the analytics modules 111a-n with relevant platform and service monitoring data, which can be real-time data. In an example, the data collector 107 can be a logically centralized function, but can be implemented in a distributed manner to achieve efficient collection of data. For example, multiple data collector modules can be provided to serve subsets of the analytics modules 111a-n for example.

According to an example, analytics modules 111a-n enable automated network management. That is, for example, if a system undergoes a change, all relevant components in the network can be reconfigured accordingly. Analytics modules are operable to generate dependency data representing a causal relationship between respective ones of a set of VM instances indicating a direct and/or indirect dependency for a service or application to be executed by the set of VM instances and specifying a dependency between the set of VM instances for the service or application.

There can be any number of analytics modules in a specific service scaling architecture deployment. Due to the flexible setup mechanisms of the data collector module, the scaling architecture can support just in time plug-in mechanisms, which allow addition and/or removal of analytics modules to or from the service scaling architecture deployment at any time.

As depicted in Figure 1, analytics modules receive real-time performance indicator data 113 provided by the data collector module 107, operate on those data and calculate load metric data 115, which describe the expected future demand of a specific performance metric. Analytics modules pass this load metric data to the service model module 117.

In an example, an analytics module is used to process data from a system in order to infer the dependency among components of the system. The system will typically perform a task and process data in a collaborative manner between components of the system, such that the performance of VMs is interlinked and is dependent on the performance of other VMs in the system. For example, the load of a VM may be dependent on another VM that processes data which may indirectly be used by other VMs of the system. Accordingly, even though there may be no direct data link between two VMs, they may be dependent upon one another as a result of an indirect link via other VMs of the system.

In an example, the performance of virtual machines is determined by recording an associated system metric such as the CPU load for a VM, memory usage, I/O disk over the time they they the VM is active. A (typically hidden) dependency pattern among VMs is inferred and this information can be used for network management such as elasticity-scaling.

According to an example, a dependency structure between VMs of a system can be inferred using various techniques. For instance machine learning or statistical inference can be used. As an example, an approach to infer dependency among VMs can be as follows:

Given trace of data (for instance CPU usage over time for all VMs) the cross-correlation among pairs of VMS can be calculated. Cross-correlation is known technique which can be used to provide a measure of the similarity of two waveforms as a function of a time-lag applied to one of them, in this case in which the waveforms are the data traces for a VM characteristic over time. For example, for two continuous time traces of CPU load, a and b for respective VMs in a system, the cross-correlation can be calculated according to:

$$(a * b)(\tau) = \int a^*(t)b(t + \tau)dt$$

where $a^*$ denotes the complex conjugate of a and $\tau$ is a selected time lag.

In an example, this measure of cross-correlation provides an estimate as to how the two VMs are correlated in respect of the parameter selected, such as CPU load or one of the other examples mentioned above. A correlation-graph can be constructed using a cross-correlation matrix between multiple VMs of the system. It is also possible to infer a causality pattern among VMs. In an example, causality data can help to determine the effect if the performance of VM "A" changes on the performance of VM "B".

Accordingly, an analytics module can be used to determine a dependency structure among VMs. This information can be used to improve network performance.

The service model module I 17 holds an always up to date service model, which describes the current state of the to-be-scaled service under control. In an example, the current state of the service, and therefore the current state of VMs of the system can be provided by a monitoring module. Typically, monitoring modules are known and provided as part of a virtualized system, and record data interactions between components of a virtualized system, such as the flow of data between a hypervisor and VMs, a flow between VMs, interactions with remote client devices, and the state of hardware resources, such as CPU load levels, memory usage and so on. Such data can be accessed and used with analytics modules according to an example.

Data can also be generated at the service level using VM components that can record data representing service level interactions between VMs and between VMs and the underlying system such as the hardware used by VMs for example. For example, a VM can include a component to provide data representing a current load of the VM. If the VM is part of a set of VMs to provide a VOIP service for example, the component can provide data relating to the call set up load of the VM.

Service state consists at least of information about which types of virtual machines (VMs) are under control of the service scaling architecture deployment and how many VMs of each type are currently instantiated in the service deployment. In addition, the service model is at least aware of how many and which types of VMs are currently in a transient state (i.e., are being booted up or shut down). In addition, the service module holds information about service scaling rules. Such scaling rules describe the relationship between load metrics and required number of instantiated types of VMs to meet expected performance needs of predicted load metrics. A service module can hold any number of scaling rules.

In general, according to an example, each scaling rule defines a relationship between any number of load metrics provided by the data collector and different types of VMs. A single scaling rule can describe the relationship between numbers of available load metrics with one type of VM. In that case there can be at least one scaling rule per type of VM under control of the service scaling architecture deployment.

Whenever the service model receives an update of a Performance Indicator 113 redictive load metric, the service model can apply this load metric to all scaling rules the metric applies to. As a result the service model is now aware of how many instances of each type of VM are required in the service deployment to meet future performance needs indicated by the updated load metric.

If the most recently calculated number of required VMs differs from the currently instantiated number of VMs, the service model module 117 can request a service deployment rescale from the underlying cloud platform via the Orchestration Interface 109 to update the service deployment using a rescale module 119. For example, data 121 specifying specific numbers of VMs for a set of VMs that are used to execute a service or application can be provided to hypervisor 103 in order to enable the hypervisor to delete and/or instantiate VMs to meet the criteria specified and therefore provide the service or application with a number of VM instances to meet a predicted load variation.

Note that in principle some kind of dead time mechanism or higher level logic can be included to ensure that service rescale requests are not requested too frequently and also changes caused by a number of Performance Indicator metrics updates received within a specified amount of time result in a single service rescale request. Furthermore, the service model module can ensure that conflictive scale out and shut down service rescale requests are resolved. For example, if scale requests are received in close proximity to one another, the requests can be monitored in order to determine if any conflict - for example, a scale up request for a VM, followed by a scale down request can effectively cancel themselves out.

VMs that are in transient state due to service deployment rescale are marked accordingly in the service model. When the cloud platform reports back via the Orchestration Interface that transient state VM(s) are finally set up or shut down the service model is updated accordingly. In case that the Orchestration Interface does not provide such feedback, the service model module can register with the data collector module to receive such information.

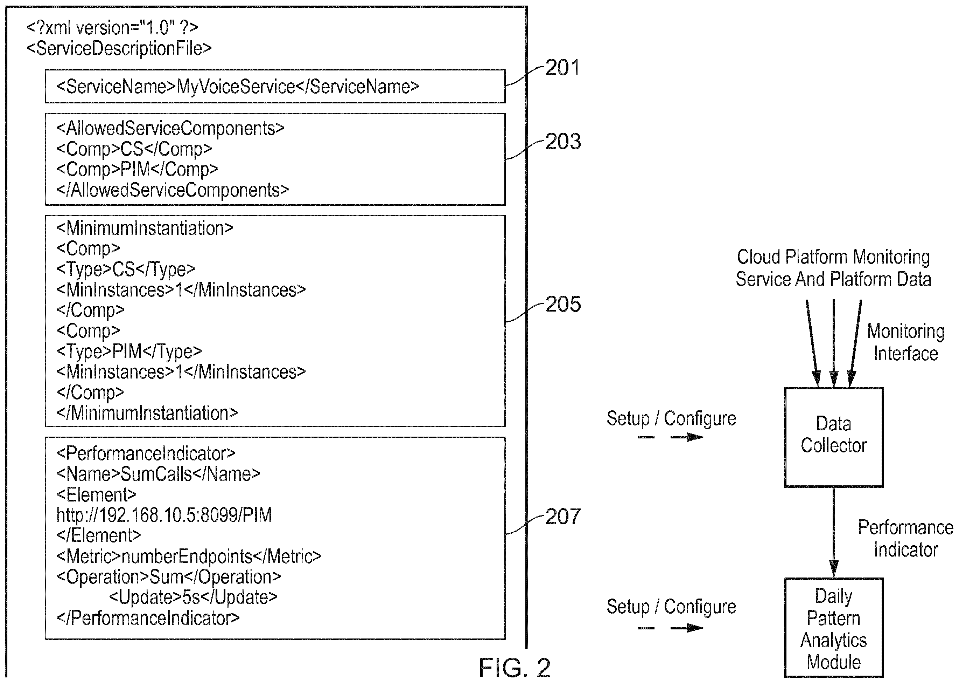

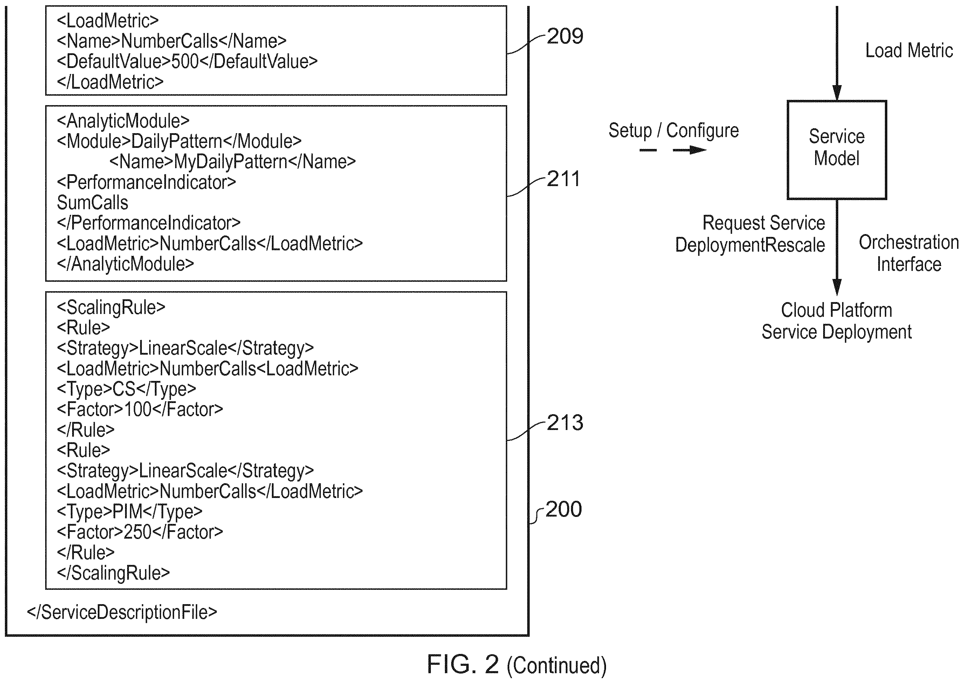

Figure 2 is a schematic representation of a Service Description File used to setup and configure a specific service scaling architecture deployment according to an example. In the example of figure 2 XML is used as markup mechanism for a service scaling description language, but other mechanisms such as, for example, JSON can be used. As indicated in Figure 2, this language allows flexible configuration of the different modules and the information elements exchanged between the different modules. In addition, a flexible and efficient configuration of the monitoring interface is supported. In the following, the given specific example of a Service Description File is used to introduce the service scaling language and how it is used to setup and configure a service scaling architecture instantiation in more detail.

<ServiceName> section 201 defines a name for the specific service scaling architecture instantiation. This name can be used to reference information related to this instantiation, e.g., in a graphical user interface.

<AllowedServiceComponents> section 203 indicates what types of service components (i.e., what types of VMs) out of a full service deployment are relevant to specify the model driven scaling mechanisms. Thus, this section allows specification of upfront knowledge that only a subset of deployed virtual machines is relevant for the definition of the service scaling rules. Being able to specify such upfront knowledge can avoid the need to exclude of a lot of potential dependencies, which can be valuable when applying self-learning analytics algorithms. In the example of figure 2, scaling rules are provided for a simple product deployment, which is made up from a number of different virtual machine types.

<MinimumInstantiation> section 205 defines the minimum number of virtual machines for each of the specified virtual machine types to ensure that the overall deployed service is always available. This information is given to the service model module which can enforce those minimum instantiation rules for each type of VM being specified here. This example specifies that there needs to be always at least one CS and one PIM type of VM being instantiated.

<PerformanceIndicator> section 207 is used to setup and configure the data collector module. One such section defines a single Performance Indicator metric, which can be passed from the data collector module to any analytics module interested in this data. Any number of Performance Indicator metrics can be defined within a Service Description File. In addition, this section provides information for the data collector module to configure the Monitoring Interface, such that all relevant information is passed to the collector module by platform and service metering or can be retrieved by the data collector module (scheme depends on a push or pull implementation of the Monitoring Interface). Finally, this section can give optional information on how monitored data should be conditioned/processed by the data collector module to calculate the Performance Indicator metric.

In this example, the Service Description File defines a single Performance Indicator metric. The name of the metric is SumCalls. The <Element> and <Metric> sections jointly define the resource indicator from which the data collector could requests/read relevant monitoring data via the monitoring interface. In case that requested monitoring data can potentially be provided by more than one resource element (e.g., there is a number of instantiations of a specific type of VM, which all provide the same kind of specific monitoring data) the <Element> part describes the type of resource (in this case PIM), which provides the relevant monitoring data. The data collector ensures via the Monitoring Interface that the relevant monitoring data, in this case "numberEndpoints" as defined in the <Metric> section is collected for each instance VM.

In case of retrieval of the same kind of monitoring data from a number of instances, it is possible to define an operation that describes how the monitoring data retrieved from the different instances should be consolidated into the single Performance Indicator metric which gets forwarded to interested analytics modules. Allowed operations are for example "Sum" to calculate the sum over all collected metrics or "Avg" to calculate the average over all collected metrics. Other operations could be e.g. "Max" or "Min".

Finally the <Update> section defines how often the data collector module can be updated with most recent monitoring information. In this case the data collector module is instructed to read the "numberEndpoints" metric every 5 seconds from each "PIM" instance, sum them up to calculate the Performance Indicator metric "SumCalls" and forward it to all interested analytics modules.

<LoadMetric> section 209 defines the Load Metrics (NumberCalls in this case) that can be exchanged between analytics modules and the service model. Any number of LoadMetrics can be defined in a Service Description File. When receiving a LoadMetric update, the service model applies the Load Metric to the appropriate scaling rules in order to derive the required number of virtual machine instances of each type as described above.

Optionally, a default value can be defined that is taken into account when the service-scaling model is instantiated and started up. This allows pre-configuration of a service model and thus the underlying service deployment to some expected load.

<AnalyticModule> section 211 is used to instantiate and setup an analytics module. Any number of analytic modules can be defined in a single Service Description File 200. The <Module> section defines which kind of analytics module can be instantiated. The <Name> section specifies a reference to this module.

<PerformanceIndicator> and <NumberCalls> sections define which Performance indicator metric(s) are required as input for this analytics module (SumCalls metric in this case) and which Load Metric metrics are defined as output (NumberCalls) of this analytics module. In this example the analytics module is provided with one input and one output metric. Not that in the general case there could be any number of input and output metrics as long as those are defined accordingly as described above.

This information is used by the data collector module to understand which analytics module(s) need to be provided with which Performance Metric(s). This information is used by the analytics module to specify the name of any output metrics.

<ScalingRule> section 213 defines the scaling rules used to derive the required number of virtual machine instances. In this example, two scaling rules are defined, applied to CS and PIM virtual machine types respectively. In this specific case, the scaling function is defined to be linear.

In an example, the dependency for the linear scaling function can be:

$$numberInstantiatedVMs = LoadMetric / Factor$$

In this specific example the defined scaling functions are:

$$\#CS\_Instances = NumberCalls/100$$

$$\#PIM\_Instances = NumberCalls/250$$

Whenever the Service Model is triggered with a Load Metric NumberCalls by the Daily Pattern analytics module, the Service Model applies the scaling rules to calculate the currently needed number of active CS and PIM virtual instances. If needed, the service model then can trigger the cloud platform via the Orchestration Interface to rescale the respective VM types to reflect most recent results derived from the scaling functions.

The <ScalingRule> information is provided to the Service Model module 117.

Scaling rule information can also be given to analytics module(s) to enable the analytics module to update the scaling rules based on analytics carried out on Performance Indicator metrics information collected during service runtime.

In case that an analytics module calculates an updated scaling rule (e.g., it is learned that for the CS scaling rule <Factor> should be 95 not 100) the analytics module can update the Service Description File (e.g., by rewriting the file or updating the relevant <Rule> part). This update of the Service Description File can trigger an update in the service model module, such that the new scaling rule is instantiated. Thus, there is feedback from the analytics into the Service Description File 200. This happens as often as an analytics module deems it necessary.

The provision of data collection and processing in terms of data collector module 107 and analytics modules 111a-n will now be described in more detail. Modern cloud-based applications generally involve many components running in large distributed environments. Often these components interact with each other in a complex manner. The performance of system depends on these complex and non-trivial interactions. For instance, the traffic traces of system metric for different virtual machines in a Cloud environment often show spatial diversity. According to an example, the delay spikes in system metric traces can be processed in order to infer the dependency among different virtual machines.

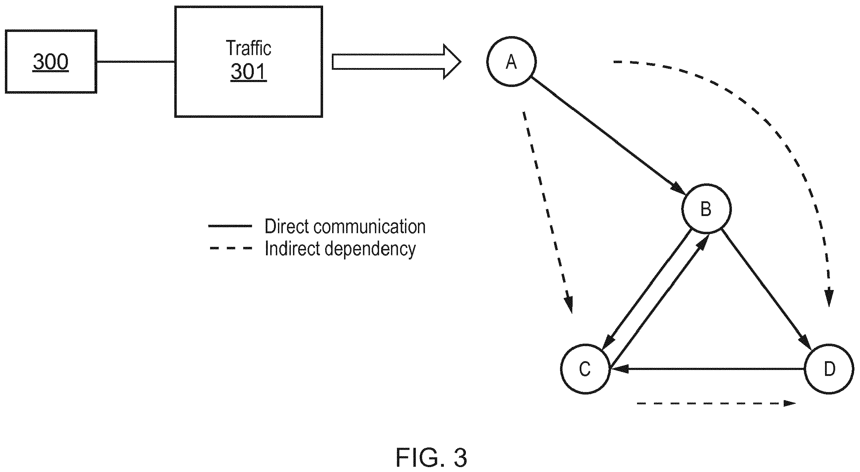

For example, a virtual machine "A" is said to be dependent on another virtual machine "B" if the performance of A depends on the performance of B and vice versa. Figure 3 is a schematic representation showing the dependency structure in a system composed of four virtual machines according to an example. The four VMs A, B, C and D can, for example, execute to provide a specific service. The VMs can be component parts of an application for example that are operable to process data in a structured way to provide an output which can be provided from one of the VMs, such as B for example.

In the example of figure 3, an external traffic workload 301 as a result of a variation in load of a system 300 hits virtual machine "A" initially. The performance of VM "B" depends directly on the performance of A and consequently it will be affected. The flow of communications propagates through the network and eventually all components will receive the traffic load. The structure of interactions could be much more complicated than that presented in Figure 3 but the crucial issues are similar. One important observation in Figure 3 is the indirect correlations among active VMs. For instance, virtual machine "A" is not directly communicating to virtual machine "C" and "D" but the performance of these two virtual machines is dependent on system performance of virtual machine "A". These indirect causality relations are derived using analytics modules 11a-n to enable the generation of a causality profile for a service. This differs significantly from previous work where relationships were input to the system. Another example in this scenario is the causation of service B on service D where a direct communication is not present.

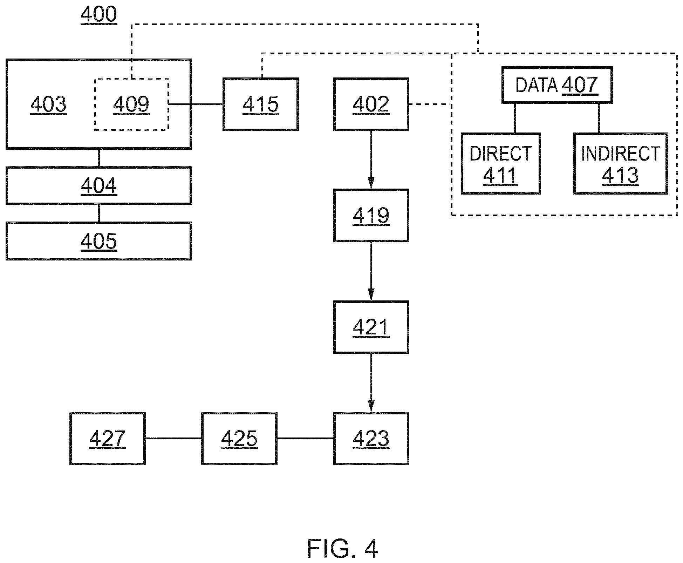

Figure 4 is a flowchart of a method according to an example. In a virtualized system 400 comprising multiple VM instances 403 executing over physical hardware 405, via a hypervisor 404 for instance, one or more of the VM instances 403 can be scaled, such as by providing additional numbers of VMs or removing VMs.

Dependency data 407 representing a causal relationship between respective ones of a set of VM instances 409 indicating a direct 411 and/or indirect 413 dependency for a service or application 415 to be executed by the set of VM instances 409 and specifying a dependency between the set of VM instances 409 for the service or application 415 is generated in block 402, for example using a method as described above. In an example, data from a hypervisor 404 (logically) over which the VMs 409 execute, is provided to a data collector 107, which can be a standalone device, or a module within a hypervisor. The data can also be provided from a service level component within one or more VMs, and/or from a monitoring module of the system as described above.

The raw data is processed in block 419 using an analytics module. For example, as noted above, a trace for CPU load for VMs can be used to determine the cross-correlation between VMs in connection with this parameter, thereby indicating any dependency between the VMs, which can be direct or indirect.

In block 421 a current state of the set of VM instances 409 is determined. In the present example, a set of VM instances 409 can be used to execute a service. The set 409 may include multiple VM instances operable to execute the same function. That is, there may be multiple instances in the set 409 that are instantiations of the same VM. The current state of the set can include an indication of the number of VM instances in the set and the function of each VM, which can be implicit from a determination of the type of VM.

In block 423 one or more of the VM instances in the set is scaled in response to a predicted variation in system load using one or more scaling rules 425 relating at least one load metric 427 for the system to a predefined number of VM instances for one or more VM instances of the set to meet a performance metric for the service or application 415.

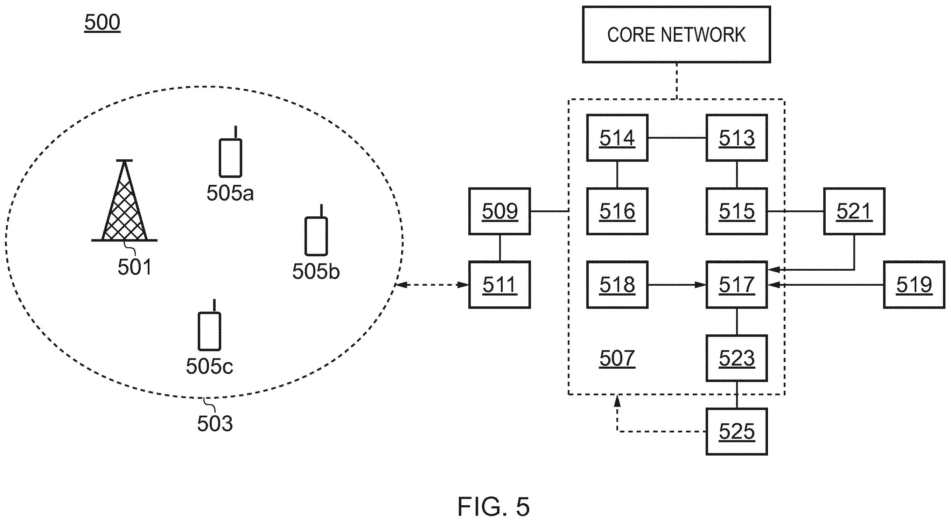

Figure 5 is a schematic representation of a telecommunications network according to an example. A network node 501, such as an evolved NodeB (eNB) for example, provides wireless telecommunications network coverage over an area 503 defining a cell for the network 500. Multiple such nodes providing cells for the network may be provided. The node 501 can send and receive data to/from one or more user equipment devices (UEs) 505a-c within the cell.

In an example, the node 501 or apparatus 506 of the network 500 such as a server located at the node, or located in a core network portion of the network 500 includes a virtualised system portion 507 operable to provide one or more network functions 509 forming one or more network services 511 for UE 505a-c. The apparatus 506 and thus the network 500 includes a data collector module 513 to receive data for the network representing one or more interactions between VM instances 514 of the system, and the system, UE or network. An analytics module 515 is operable to generate dependency data representing a causal relationship between respective ones of a set 516 of VM instances indicating a direct and/or indirect dependency between the set of VM instances for a service or application to be executed by the set of VM instances. A service model module 517 is operable to receive a current state 519 of the set of VM instances for the system, and a load metric 521 from the analytics module 515, and a rescale module 523 is operable to receive data from the service model module 517 and generate data 525 representing an updated service deployment for the set of VM instances.

The data collector 513 can receive data representing a desired performance indicator for the network 500. The service model module 517 can use a scaling rule 518 to calculate a number of VM instances for the set to meet a desired performance requirement for the service or application for UE by comparing the current state of the set of VM instances with a predetermined number of VM instances expected to meet the desired performance requirement for the service or application.

The rescale module 523 can receive the calculated number and transmit a signal for the system to rescale one or more VM instances in the set 516. The data collector 513 can receive raw data from the system relating to interactions between VM instances of the system via a monitoring interface of the system.

That is, in a network 500 an apparatus, which can be provided at a core network portion of the network or at a base station node 501 for example, can provide a virtualized system portion for the network 500 to enable a service or application for the network 500 that can be used by one or more UEs 505a-c to be scaled. In an example, scaling can be performed in anticipation of a variation in load for the application of service from the UEs 505a-c. Data from the network can be used to determine a dependency between VMs, which can include an indirect dependency, in order to enable VMs to be scaled which may not otherwise be scaled based on a typical measure of CPU load for a VM and so on. For example, an indirect dependency between a set of VMs for a service can be taken into account to enable the service to scale in response to or in anticipation of a variation in load for the service.

As used herein, the term virtual machine is not intended to be limiting. For example, a virtual machine can be in the form of an execution environment in the form of a container, or by way of OS-level virtualization for example. Accordingly, different isolated containers, or namespaces, or execution environments, residing in the same OS, but sufficiently isolated so that they are essentially executing in an exclusive OS environment can be used.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

**Claims**

**1.** A computer-implemented method, in a virtualized system (400) comprising multiple virtual machine, VM, instances (403) executing over physical hardware (405), for scaling one or more of the VM instances, the method comprising:

collecting data representing one or more interactions between VM instances for execution of a service or application (415);
generating, via cross-correlation of (402) said data, dependency data representing a causal relationship between a set of VM instances and indicating a direct and/or indirect dependency between the set of VM instances ;
generating (427) from said data a load metric representing expected future demand of a specific performance metric ;
determining (421) a current state of the set of VM instances;
calculating from the load metric and the current state, using one or more scaling rules, a number of VM instances for the set to meet the desired performance metric for the service or application by comparing the current state of the set of VM instances with a predetermined number of VM instances expected to meet the desired performance metric for the service or application; and
transmitting a signal to rescale one or more VM instances based on the calculated number of VM instances.

**2.** A computer-implemented method as in claim 1, wherein a scaling rule relates the load metric to a category of VM instance.

**3.** A computer-implemented method as claimed in any preceding claim, further including updating a scaling rule to modify the predefined number of VM instances in response to a change in the dependency data.

**4.** A computer-implemented method as claimed in any preceding claim, further including generating a configuration for the set of VMs using a service scaling description language, wherein the configuration includes data representing information elements exchanged between the different ones of the VMs of the set.

**5.** A system (100) for scaling one or more virtual machine, VM, instances in a virtualized environment comprising multiple VM instances executing over physical hardware, the system comprising:

a data collector module (107) arranged to receive data representing one or more interactions between VM instances for execution of a service or application;
an analytics module (111a) arranged to generate dependency data from the data received by the data collection module via cross-correlation of said data, the dependency data representing a causal relationship between a set of VM instances and indicating a direct and/or indirect dependency between the set of VM instances and from said data, a load metric representing expected future demand of a specific performance metric ;
a service model module (117) arranged to receive a current state of the set of VM instances, and the load metric from the analytics module, and use a scaling rule to calculate a number of VM instances for the set to meet the desired performance metric for the service or application by comparing the current state of the set of VM instances with a predetermined number of VM instances expected to meet the desired performance metric for the service or application; and
a rescale module (119) arranged to receive the calculated number and transmit a signal for the system to rescale one or more VM instances in the set.

**6.** A system as claimed in claim 5, wherein the data collector is arranged to receive data representing a desired performance indicator for the system.

**7.** A telecommunications network comprising a system according to any of claim 5 or 6.

**Patentansprüche**

**1.** Computerimplementiertes Verfahren in einem virtualisierten System (400), das mehrere virtuelle Maschineninstanzen, VM-Instanzen, (403) umfasst, die über physische Hardware (405) zum Skalieren einer oder mehrerer der VM-Instanzen ausgeführt werden, wobei das Verfahren umfasst:

Sammeln von Daten, die eine oder mehrere Interaktionen zwischen VM-Instanzen zur Ausführung eines Dienstes oder einer Anwendung darstellen (415);
Erzeugen von Abhängigkeitsdaten, die eine kausale Beziehung zwischen einem Satz von VM-Instanzen darstellen und eine direkte und/oder indirekte Abhängigkeit zwischen dem Satz von VM-Instanzen anzeigen, durch Kreuzkorrelation (402) der Daten;
Erzeugen (427) einer Lastmetrik aus den Daten, die den erwarteten zukünftigen Bedarf an einer bestimmten Leistungsmetrik darstellt;
Bestimmen (421) eines aktuellen Zustands des Satzes von VM-Instanzen;
Berechnen einer Anzahl von VM-Instanzen für den Satz aus der Lastmetrik und dem aktuellen Zustand unter Verwendung einer oder mehrerer Skalierungsregeln, um die gewünschte Leistungsmetrik für den Dienst oder die Anwendung zu erfüllen, indem der aktuelle Zustand des Satzes von VM-Instanzen mit einer vorbestimmten Anzahl von VM-Instanzen verglichen wird, die voraussichtlich die gewünschte Leistungsmetrik für den Dienst oder die Anwendung erfüllen; und
Übertragen eines Signals zum Neuskalieren einer oder mehrerer VM-Instanzen basierend auf der berechneten Anzahl von VM-Instanzen.

2. Computerimplementiertes Verfahren nach Anspruch 1, wobei eine Skalierungsregel die Lastmetrik auf eine Kategorie einer VM-Instanz bezieht.

3. Computerimplementiertes Verfahren nach einem der vorhergehenden Ansprüche, das ferner das Aktualisieren einer Skalierungsregel zum Ändern der vordefinierten Anzahl von VM-Instanzen als Reaktion auf eine Änderung der Abhängigkeitsdaten beinhaltet.

4. Computerimplementiertes Verfahren nach einem der vorhergehenden Ansprüche, ferner umfassend das Erzeugen einer Konfiguration für den Satz von VMs unter Verwendung einer Serviceskalierungsbeschreibungssprache, wobei die Konfiguration Daten beinhaltet, die Informationselemente darstellen, die zwischen den verschiedenen VMs des Satzes ausgetauscht werden.

5. System (100) zum Skalieren einer oder mehrerer Instanzen einer virtuellen Maschine, VM, in einer virtualisierten Umgebung, die mehrere VM-Instanzen umfasst, die über physikalische Hardware ausgeführt werden, wobei das System umfasst:

ein Datensammlermodul (107), das zum Empfangen von Daten angeordnet ist, die eine oder mehrere Interaktionen zwischen VM-Instanzen zur Ausführung eines Dienstes oder einer Anwendung darstellen;
ein Analysemodul (111a), das zum Erzeugen von Abhängigkeitsdaten aus den vom Datenerfassungsmodul empfangenen Daten durch Kreuzkorrelation der Daten angeordnet ist, wobei die Abhängigkeitsdaten eine kausale Beziehung zwischen einem Satz von VM-Instanzen darstellen und eine direkte und/oder indirekte Abhängigkeit zwischen dem Satz von VM-Instanzen und von den Daten anzeigen, wobei eine Lastmetrik den erwarteten zukünftigen Bedarf an einer bestimmten Leistungsmetrik darstellt;
ein Dienstmodellmodul (117), das zum Empfangen eines aktuellen Zustands des Satzes von VM-Instanzen und der Lastmetrik aus dem Analysemodul und zum Verwenden einer Skalierungsregel zum Berechnen einer Anzahl von VM-Instanzen für den Satz angeordnet ist, um die gewünschte Leistungsmetrik für den Dienst oder die Anwendung zu erfüllen, indem der aktuelle Zustand des Satzes von VM-Instanzen mit einer vorbestimmten Anzahl von VM-Instanzen verglichen wird, die voraussichtlich die gewünschte Leistungsmetrik für den Dienst oder die Anwendung erfüllen; und
ein Neuskalierungsmodul (119), das zum Empfangen der berechneten Zahl und zum Senden eines Signals für das System zum Neuskalieren einer oder mehrerer VM-Instanzen in dem Satz angeordnet ist.

6. System nach Anspruch 5, wobei der Datensammler zum Empfangen von Daten angeordnet ist, die einen gewünschten Leistungsindikator für das System darstellen.

7. Telekommunikationsnetzwerk, umfassend ein System nach einem der Ansprüche 5 oder 6.

**Revendications**

1. Procédé mis en oeuvre par ordinateur, dans un système virtualisé (400) comportant des instances multiples (403) de machines virtuelles, VM, s'exécutant sur un matériel physique (405), pour mettre à l'échelle une ou plusieurs des instances de VM, le procédé comprenant :

   la collecte de données représentant une ou plusieurs interactions entre instances de VM pour l'exécution d'un service ou d'une application (415) ;
   la génération, via une corrélation croisée (402) desdites données, de données de dépendance représentant une relation causale au sein d'un ensemble d'instances de VM et indiquant une dépendance directe et/ou indirecte au sein de l'ensemble d'instances de VM ;
   la génération (427), à partir desdites données, d'une métrique de charge représentant une demande future prévue d'une métrique spécifique de performances ;
   la détermination (421) d'un état actuel de l'ensemble d'instances de VM ;
   le calcul, à partir de la métrique de charge et de l'état actuel, en utilisant une ou plusieurs règles de mise à l'échelle, d'un nombre d'instances de VM pour que l'ensemble satisfasse la métrique de performances souhaitée pour le service ou l'application en comparant l'état actuel de l'ensemble d'instances de VM avec un nombre prédéterminé d'instances de VM dont il est prévu qu'il satisfasse la métrique de performances souhaitée pour le service ou l'application ; et
   l'émission d'un signal pour remettre à l'échelle une ou plusieurs instances de VM d'après le nombre d'instances de VM calculé.

2. Procédé mis en oeuvre par ordinateur selon la revendication 1, une règle de mise à l'échelle liant la métrique de charge à une catégorie d'instance de VM.

3. Procédé mis en oeuvre par ordinateur selon l'une quelconque des revendications précédentes, comprenant en outre la mise à jour d'une règle de mise à l'échelle pour modifier le nombre d'instances de VM prédéfini en réaction à un changement dans les données de dépendance.

4. Procédé mis en oeuvre par ordinateur selon l'une quelconque des revendications précédentes, comprenant en outre la génération d'une configuration pour l'ensemble de VM à l'aide d'un langage de description de mise à l'échelle de services, la configuration comprenant des données représentant des éléments d'information échangés entre les différentes VM de l'ensemble.

5. Système (100) de mise à l'échelle d'une ou plusieurs instances de machines virtuelles, VM, dans un environnement virtualisé comportant des instances multiples de VM s'exécutant sur un matériel physique, le système comportant :

   un module collecteur (107) de données agencé pour recevoir des données représentant une ou plusieurs interactions entre instances de VM pour l'exécution d'un service ou d'une application ;
   un module (111a) d'analyse agencé pour générer des données de dépendance à partir des données reçues par le module de collecte de données via une corrélation croisée desdites données, les données de dépendance représentant une relation causale au sein d'un ensemble d'instances de VM et indiquant une dépendance directe et/ou indirecte au sein de l'ensemble d'instances de VM et à partir desdites données, une métrique de charge représentant une demande future prévue d'une métrique spécifique de performances ;
   un module (117) de modèle de service agencé pour recevoir un état actuel de l'ensemble d'instances de VM, et la métrique de charge en provenance du module d'analyse, et utiliser une règle de mise à l'échelle pour calculer un nombre d'instances de VM pour que l'ensemble satisfasse la métrique de performances souhaitée pour le service ou l'application en comparant l'état actuel de l'ensemble d'instances de VM avec un nombre prédéterminé d'instances de VM dont il est prévu qu'il satisfasse la métrique de performances souhaitée pour le service ou l'application ; et
   un module (119) de remise à l'échelle agencé pour recevoir le nombre calculé et émettre un signal pour que le système remette à l'échelle une ou plusieurs instances de VM de l'ensemble.

6. Système selon la revendication 5, le collecteur de données étant agencé pour recevoir des données représentant un indicateur de performances souhaité pour le système.

7. Réseau de télécommunications comportant un système selon l'une quelconque des revendications 5 et 6.

**FIG. 1**

```
<?xml version="1.0" ?>
<ServiceDescriptionFile>
```

<ServiceName>MyVoiceService</ServiceName>          201

```
<AllowedServiceComponents>
<Comp>CS</Comp>
<Comp>PIM</Comp>
</AllowedServiceComponents>
```
203

```
<MinimumInstantiation>
<Comp>
<Type>CS</Type>
<MinInstances>1</MinInstances>
</Comp>
<Comp>
<Type>PIM</Type>
<MinInstances>1</MinInstances>
</Comp>
</MinimumInstantiation>
```
205

```
<PerformanceIndicator>
<Name>SumCalls</Name>
<Element>
http://192.168.10.5:8099/PIM
</Element>
<Metric>numberEndpoints</Metric>
<Operation>Sum</Operation>
        <Update>5s</Update>
</PerformanceIndicator>
```
207

Cloud Platform Monitoring
Service And Platform Data

Monitoring
Interface

Setup / Configure →    Data
Collector

Performance
Indicator

Setup / Configure →    Daily
Pattern
Analytics
Module

FIG. 2

EP 3 035 619 B1

```
<LoadMetric>
<Name>NumberCalls</Name>
<DefaultValue>500</DefaultValue>
</LoadMetric>
```
— 209

```
<AnalyticModule>
<Module>DailyPattern</Module>
        <Name>MyDailyPattern</Name>
<PerformanceIndicator>
SumCalls
</PerformanceIndicator>
<LoadMetric>NumberCalls</LoadMetric>
</AnalyticModule>
```
— 211

```
<ScalingRule>
<Rule>
<Strategy>LinearScale</Strategy>
<LoadMetric>NumberCalls<LoadMetric>
<Type>CS</Type>
<Factor>100</Factor>
</Rule>
<Rule>
<Strategy>LinearScale</Strategy>
<LoadMetric>NumberCalls</LoadMetric>
<Type>PIM</Type>
<Factor>250</Factor>
</Rule>
</ScalingRule>
```
— 213

— 200

```
</ServiceDescriptionFile>
```

Load Metric

Setup / Configure

Service Model

Request Service DeploymentRescale

Orchestration Interface

Cloud Platform Service Deployment

FIG. 2 (Continued)

EP 3 035 619 B1

EP 3 035 619 B1

300

Traffic
301

—— Direct communication
- - - Indirect dependency

A

B

C

D

FIG. 3

400

403 | 409 | 415 | 402 | DATA 407 | DIRECT 411 | INDIRECT 413

404

405

419

421

427 | 425 | 423

FIG. 4

FIG. 5

EP 3 035 619 B1

**EP 3 035 619 B1**

## REFERENCES CITED IN THE DESCRIPTION

### Patent documents cited in the description

- US 20140317261 A1
- US 20130174146 A1

- US 20130007254 A1

### Non-patent literature cited in the description

- Network Function Virtualisation (NFV) Management and Orchestration. European Telecommunications Standards Institute (ETSI), April 2014